# EUROPÄISCHE PATENTANMELDUNG

(11) **EP 1 785 590 A1**
(43) Veröffentlichungstag der Anmeldung: **16.05.2007**
(21) Anmeldenummer: 05405627.0
(22) Anmeldetag: 10.11.2005
(51) Int. Cl.: F01D 5/30, B23P 15/00

(54) **Werkstück sowie Schweissverfahren zur Herstellung eines Werkstücks**

(71) Anmelder: Sulzer Markets and Technology AG, 8401 Winterthur (CH)
(72) Erfinder: Jahnen, Werner, Dr., 8474 Welsikon Dinhard (CH)
(74) Vertreter: Sulzer Management AG

(57) **Zusammenfassung**

Die Erfindung betrifft eine Werkstück (1), insbesondere Laufrad, Impeller, oder Leitrad für eine Turbine, für eine Pumpe oder für einen Verdichter, umfassend einen Grundkörper (2) mit einer Leitschaufel (3), wobei die Leitschaufel (3) am Grundkörper (2) und / oder an einem Deckteil (4) kerbfrei verschweisst ist. Darüber hinaus betrifft die Erfindung ein Schweissverfahren zur Herstellung eines Werkstücks (1).

## Beschreibung

Die Erfindung betrifft ein Werkstück, insbesondere Laufrad, Impeller, oder Leitrad für eine Turbine, eine Pumpe oder einen Verdichter, sowie ein Schweissverfahren zur Herstellung eines Werkstücks gemäss dem Oberbegriff des unabhängigen Anspruchs der jeweiligen Kategorie.

Es ist bekannt, rotierende Laufräder, Pumpenräder, Impeller, sowie feststehende Leiträder für Pumpen, Verdichter oder Turbinen aus massivem Material durch spanabhebende Bearbeitung herauszuarbeiten Bei geometrisch einfach aufgebauten Laufrädern und Leiträdern, die zu dem keinen all zu hohen Belastungen im Betriebszustand ausgesetzt sind, können die Laufräder auch aus Einzelteilen zusammengesetzt, oder aus einem Stück gefertigt werden. Das trifft insbesondere auf einfach aufgebaute Leiträder zu, die nicht zu grossen mechanischen Belastungen ausgesetzt sind, weil sie selbst nicht bewegt werden und somit auch keine Unwuchten oder Zentrifugalkräfte auftreten. Aber auch verhältnismässig langsam laufende Laufräder können mit verhältnismässig geringem Aufwand aus Einzelteilen zusammengesetzt werden, wobei zum Beispiel geeignete Passungen an den Bauteilen vorgesehen werden können, die dann mittels Schweissen dauerhaft verbunden werden. Diese Schweissungen dienen jedoch im wesentlichen nur der Lagefixierung und sind für die Übertragung grösserer Kräfte und Belastungen nicht geeignet.

Besonders problematisch ist in diesem Zusammenhang die Befestigung von Deckscheiben oder Nabenscheiden an den Schaufeln von Impellern. Diese Problematik soll im folgenden beispielhaft anhand von Radial- und Axialverdichtern kuerz erörtert werden, wobei die prinzipielle Problematik auch bei anderen entsprechenden Vorrichtungen relevant sein kann.

Der Radialverdichter beispielsweise besteht wie die Kreiselpumpe im wesentlichen aus einem rotierenden Laufrad, auch Schaufelrad genannt, das auf einer Achse montiert ist und sowohl offen, als auch mit einem Deckel versehen sein kann, wobei das Laufrad im Speziellen in einem umschliessenden, feststehenden Leitrad angeordnet sein kann oder von einem spiralförmigen Sammelraum umschlossen sein kann. Das Leitrad hat dabei die Form eines Diffusors, in dem ein Teil der im Rotor erzeugten kinetischen Energie in Druckenergie umgewandelt wird. Das Leitrad besteht in dieser Ausführungsform im wesentlichen aus einer Oberscheibe und einer Unterscheibe, auch als Deckel bzw. Boden bezeichnet, zwischen denen sich Leitschaufeln befinden können.

Der Axialverdichter, umfassend einen Rotor und einen Stator, besteht in bekannter Weise aus einem als Laufrad ausgestalteten Rotor mit Antriebswelle und Leitschaufeln, wobei die Laufräder mit oder ohne Aussenring, also mit oder ohne Deckteil ausgestaltet sein können. Der Stator ist als umfassendes Gehäuse ausgebildet, in dem die feststehenden Leiträder untergebracht sind, wobei nicht in jedem Fall, wie zum Beispiel bei bestimmten Ventilatoren, ein Stator vorgesehen sein muss.

Es sei an dieser Stelle ausdrücklich klar gestellt, dass im Rahmen dieser Anmeldung unter dem Begriff "Leitschaufel" sowohl die gängige Bezeichnung für die Schaufeln eines Laufrades, als auch die Schaufeln eines Leitrades zu verstehen sind.

Die Laufräder sind dabei im Betriebszustand hoch belastet, da sie zum Teil mit enormen Rotationsgeschwindigkeiten von beispielweise bis zu 15.000 U/min bei einem Durchmesser des Laufrades von z.B. 400 mm beträchtlichen Zentrifugalkräften ausgesetzt sind. Dabei sind typischerweise Umfangsgeschwindigkeiten am Aussendurchmesser von bis zu 400 m/s und mehr durchaus erreichbar.

Es ist daher bekannt, die Laufräder aus massivem Material, je nach Anwendung z.B. aus hochfesten Edelstählen, Superlegierungen oder anderen geeigneten Metallen oder Metallegierungen zu fertigen und die Leitschaufeln durch spanabhebende Bearbeitung, z.B. durch Fräsen, aus diesem Material herauszuarbeiten. Wenn die Laufräder, wie im Falle eines Impellers, zusätzlich mit einem Deckteil in Form eines Deckels ausgestattet werden müssen, ist es häufig aus rein geometrischen Gründen nicht mehr möglich, das Laufrad insgesamt in einem Stück aus massivem Material zu fräsen, sondern entweder wird ein einteiliger Grundkörper, der auf der Antriebesachse des Verdichters sitzt, mit Leitschaufeln herausgearbeitet, so dass ein Deckteil nachträglich auf die Leitschaufeln aufgesetzt und mit diesen zuverlässig verbunden werden muss. Oder in speziellen Fällen kann es auch möglich sein, dass ein Deckteil mit Leitschaufeln in einem Stück aus massivem Material gearbeitet wird, und der Grundkörper, der mit der Antriebsachse gekoppelt ist, mit dem Deckteil mit Leitschaufeln nachträglich zu einem kompletten Impeller zusammengesetzt und verbunden werden muss.

Der problematische Teil ist somit die Verbindung der Leitschaufeln mit einem zugehörigen Deckteil bzw. mit einem Grundkörper. Die DE 102 61 262 A1 gibt dazu ein Verfahren an, mit welchem mittels Laserschweissen oder Elektronenschweissen Leitschaufeln mit Deckscheiben mittels Stumpf oder Durchschweissnähten verbunden werden.

Der Nachteil dieses und verwandter, aus dem Stand der Technik bekannter Verfahren besteht unter anderem darin, dass Kerben im Material zu Risskräften führen, so dass unakzeptabel grosse Kerbwirkungsfaktoren auftreten können, die unter der Einwirkung der enormen Zentrifugalkräfte im Betriebszustand dazu führen können, dass Schäden am Laufrad auftreten, die letztlich zur Zerstörung des Laufrads und damit der zugeordneten Maschine, zum Beispiel des Verdichters, der Pumpe oder der Turbine führen können.

Die Aufgabe der Erfindung ist es daher, ein Werkstück, insbesondere ein Laufrad, einen Impeller oder ein Leitrad für eine Turbine, eine Pumpe oder einen Verdichter bereitzustellen, bei welchem ein Deckteil und / oder ein Grundkörper zuverlässig mit zugeordneten Leitschaufeln verschweisst ist, so dass ein sicherer Betrieb auch unter extremen Betriebszuständen, wie zum Beispiel bei sehr hohen Rotationsgeschwindigkeit, gewährleistet ist. Eine weitere Aufgabe der Erfindung ist es ein Schweissverfahren zur Herstellung solcher Werkstücke zur Verfügung zu stellen.

Die diese Aufgaben in apparativer und verfahrenstechnischer Hinsicht lösenden Gegenstände der Erfindung sind durch die Merkmale des unabhängigen Anspruchs der jeweiligen Kategorie gekennzeichnet.

Die jeweiligen abhängigen Ansprüche beziehen sich auf besonders vorteilhafte Ausführungsformen der Erfindung.

Die Erfindung betrifft somit eine Werkstück, insbesondere Laufrad, Impeller, oder Leitrad für eine Turbine, für eine Pumpe oder für einen Verdichter, umfassend einen Grundkörper mit einer Leitschaufel, wobei die Leitschaufel am Grundkörper und / oder an einem Deckteil kerbfrei verschweisst ist.

Die Eliminierung von inneren Kerbwirkungen erfolgt dabei bevorzugt durch flächendeckende Verschmelzung von der Leitschaufel mit dem Deckteil und / oder dem Grundkörper durch mehrere überlappende Schweissbahnen. Die Eliminierung äusserer Kerbwirkungen im Winkel zwischen einem Fuss und / oder einer Spitze der Leitschaufel und dem Deckteil und / oder dem Grundkörper wird z.B. mittels Vorfräsen eines Übergangsradius an der Leitschaufel erreicht, der ebenfalls mit dem Deckteil und / oder dem Grundkörper verschweisst wird. Die Eliminierung von Kerbwirkungen durch Oberflächenrauigkeiten wird durch den flächigen Laserschweissprozess als solchem sicher gestellt, da dieser auf der der Strahlzuführung abgewandten Seite beim Durchschmelzen des Auslaufs des vorgeformten Radius der Leitschaufel eine glatte Schmelzoberfläche zurücklässt. Zusätzlich kann bei Überschreiten der durchschweissbaren Schaufeldicke, die abhängig von der Laserstrahlleistung sein kann, das Einfräsen von Nuten in das Deckteil und / oder in den Grundkörper, in einer Tiefe vorgesehen werden, die eine durchschweissbare Restwandstärke am Nutboden zurücklässt. Durch nachheriges Füllen der Nute mit einem geeigneten Verfahren, insbesondere mit einem Schmelzschweissverfahren, kann die Nute wieder aufgefüllt bzw. verschlossen werden.

Es ist klar, dass die Verschweissung auch durch Kombination verschiedener Schweissverfahren erfolgen kann. So kann z.B. der flächige Schweissprozess ein Elektronenstrahl Schweissen sein, während die Aussenbereiche mit einem Laserstrahl, oder umgekehrt, geschweisst sind.

Es versteht sich, dass die Leitschaufel in speziellen Ausführungsbeispielen entweder am Deckteil oder am Grundkörper oder auch gleichzeitig am Grundkörper und am Deckteil vorgesehen sein kann.

Es ist weiter klar, dass die Erfindung insbesondere schnell rotierende Laufräder betrifft und das erfindungsgemässe Schweissverfahren besonders vorteilhaft zur Verschweissung schnell rotierender Werkstücke, wie schnell rotierenden Laufrädern Verwendung findet. Setbstverständtich betrifft die Erfindung aber auch feststehende Leiträder, die zum Beispiel besonders resistent gegen starke thermische Belastungen oder gegen andere mechanische Belastungen, z.B. Strömungsbefastungen sein müssen, die im Betriebszustand, z.B. einer Turbine, einer Pumpe oder eines Verdichters auftreten können, die also nicht nur die durch Zentrifugalkräfte hervorgerufenen Belastungen betrifft.

Besonders vorteilhaft, aber nicht notwendig, ist ein erfindungsgemässes Laufrad aus massivem Material, je nach Anwendung z.B. aus hochfestem Edelstahl, aus einer Superlegierung oder aus einem anderen geeigneten Metall oder Metallegierung gefertigt und die Leitschaufeln sind durch spanabhebende Bearbeitung, z.B. durch Fräsen, aus diesem Material herausgearbeitet. Es versteht sich, dass die Schaufelkanäle am Grundkörper und / oder am Deckteil auch durch andere geeignete Verfahren, z.B. durch Erodieren, Schmieden. Schweissen, usw. hergestellt sein können.

Wenn die Laufräder, wie im Falle eines Impellers, zusätzlich mit einem Deckteil in Form eines Deckels ausgestattet werden müssen, ist es aus rein geometrischen Gründen nicht mehr möglich, das Laufrad insgesamt in einem Stück aus massivem Material zu fräsen, sondern entweder wird ein einteiliger Grundkörper, der auf der Antriebsachse des Verdichters montierbar ist, mit Leitschaufeln herausgearbeitet, so dass ein Deckteil nachträglich auf die Leitschaufeln aufgesetzt und mit diesen zuverlässig gemäss einem erfindungsgemässen Schweissverfahren verschweisst wird. In speziellen Fällen kann es auch möglich sein, dass das Deckteil mit Leitschaufeln in einem Stück aus massivem Material gearbeitet ist, und der Grundkörper, der mit der Antriebsachse gekoppelt ist, mit dem Deckteil mit Leitschaufeln nachträglich zu einem kompletten Impeller gemäss einem erfindungsgemässen Schweissverfahren verschweisst wird. Es versteht sich, dass die Erfindung darüberhinaus auch Laufräder und Leiträder ohne Deckteil betrifft und das erfindungsgemässe Verfahren auch für die Herstellung solcher Werkstücke vorteilhaft einsetzbar ist.

In einem speziellen Ausführungsbeispiel betrifft die Erfindung ein Werkstück, wobei die Leitschaufel am Grundkörper und / oder am Deckteil mit einem Energiestrahl, insbesondere mit einem Laserstrahl, im speziellen mittels Lasertiefschweissen, das auch unter dem englischen Begriff "Key-Hole-Welding" dem Fachmann wohl bekannt ist, verschweisst ist. Dabei ist die Leitschaufel bevorzugt über eine gesamte Breite einer Kontaktfläche zwischen dem Grundkörper und / oder dem Deckteil vollständig, d.h. flächig verschweisst. Dadurch werden die gefürchteten Kerbwirkungen vermieden, die bei den aus dem Stand der Technik bekannten geschweissten Werkstücken auftreten.

Insbesondere um Kerben bzw. Kerbwirkungen auch am Rand des geschweissten Bereichs zu unterdrücken, ist die Leitschaufel im Bereich der Kontaktfläche besonders vorteilhaft so ausgestaltet, dass sie sich in Richtung zur Kontaktfläche hin erweiternd erstreckt, insbesondere in Form eines ausgefrästen Kreisbogens.

Vor allem in Fällen in denen der Grundkörper und / oder das Deckteil eine Dicke aufweist, die so gross ist, dass sie vom Schweissstrahl, insbesondere vom Laserstrahl, nicht durchschweisst werden kann, kann im Grundkörper und / oder im Deckteil auf einer der Kontaktfläche abgewandten Seite der Leitschaufel eine Schweissmulde vorgesehen sein, so dass die zu durchschweissende Dicke verringert ist.

Bevorzugt ist die Schweissmulde mit einem Füllwerkstoff ausgefüllt, d.h. die Schweissmulde kann nach erfolgtem Schweissen wieder mit einem Füllwerkstoff, zum Beispiel mittels Auftragsschweissen, wieder aufgefüllt werden.

Wie oben bereits erläutert, kann in einem für die Praxis besonders wichtigen Ausführungsbeispiel die Leitschaufel mittels eines zerspanenden Verfahrens, z.B. durch Fräsen, aus dem Grundkörper und / oder aus dem Deckteil herausgearbeitet sein.

Als bevorzugte Materialien für den Grundkörper und / oder die Leitschaufel und / oder das Deckteil kommen dabei unter anderem Nickelbasis Legierungen, im Speziellen Inconel, insbesondere Inconel 718, eine Superlegierung. Stahl, Titan Aluminium oder andere geeignete Metalle oder Metallegierungen in Frage.

Die Erfindung betrifft weiter ein Schweissverfahren zur Herstellung eines Werkstücks, insbesondere Laufrad, Impeller, oder Leitrad für eine Turbine, eine Pumpe oder einen Verdichter, umfassend einen Grundkörper mit einer Leitschaufel, wobei die Leitschaufel am Grundkörper und / oder an einem Deckteil kerbfrei verschweisst wird.

Die Leitschaufel wird dabei bevorzugt am Grundkörper und / oder am Deckteil mit einem Energiestrahl, insbesondere mit einem Laserstrahl, im speziellen mittels Lasertiefschweissen verschweisst, wobei die Leitschaufel besonders vorteilhaft über eine gesamte Breite einer Kontaktfläche zwischen dem Grundkörper und / oder dem Deckteil vollständig, d.h. flächig verschweisst wird. Dabei kann sich die Leitschaufel im Bereich der Kontaktfläche in Richtung zur Kontaktfläche hin erweiternd erstrecken und die Leitschaufel wird auch im Bereich einer Umgrenzungslinie der Kontaktfläche kerbfrei verschweisst.

Besonders im Fall eines Grundkörpers und / oder Deckteils von grosser Dicke kann im Grundkörper und / oder im Deckteil auf einer der Kontaktfläche abgewandten Seite der Leitschaufel eine Schweissmulde vorgesehen werden, wobei die Schweissmulde mit einem Füllwerkstoff, insbesondere mittels Auftragsschweissen, nach dem eigentlichen Schweissvorgang wieder ausgefüllt werden kann.

In einem für die Praxis besonders wichtigen Ausführungsbeispiel wird die Leitschaufel mittels eines zerspanenden Verfahrens, insbesondere durch Fräsen aus dem Grundkörper und / oder aus dem Deckteil herausgearbeitet. Dabei wird der Grundkörper und / oder die Leitschaufel und / oder das Deckteil vorteilhaft aus einer Nickelbasis Legierung, im Speziellen aus Inconel, insbesondere aus Inconel 718, aus einer Superlegierung aus Stahl, aus Titan Aluminium oder aus einem anderen geeigneten Metall oder einer Metallegierung gefertigt.

Im folgenden wird die Erfindung an Hand der Zeichnung näher erläutert. Es zeigen in schematischer Darstellung:
- Fig. 1: Impeller eines Radialverdichters im Schritt;
- Fig. 2: Laufrad mit Deckteil, geschweisst mit einem aus dem Stand der Technik bekannten Verfahren;
- Fig. 3: Laufrad gemäss Fig. 1, geschweisst mit einem erfindungsgemässen Schweissverfahren

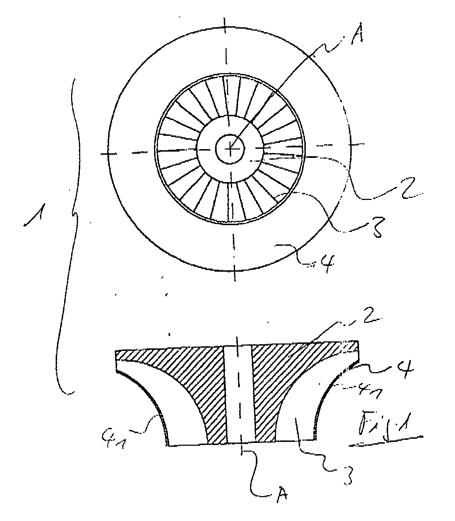

In Fig. 1 ist in schematischer Darstellung ein Impeller z.B. eines Radialverdichters, im Schnitt und in der korrespondierenden Draufsicht gezeigt, dessen grundlegende Geometrie an sich wohl bekannt ist. Der erfindungsgemässe Impeller, der im Folgenden gesamthaft mit dem Bezugszeichen 1 bezeichnet wird, umfasst in an sich bekannter Weise einen Grundkörper 2, der rotierbar um eine Achse A an einer Antriebsachse, z.B. in einem Verdichter, angeordnet ist. Aus dem Grundkörper 2 ist mittels eines spanabhebenden Verfahrens, z.B. durch Drehen oder Fräsen eine Vielzahl von Leitschaufeln 3 herausgearbeitet. In im wesentlichen radialer Richtung nach aussen ist der impeller durch ein Deckteil 4 abgedeckt, das sich entlang einer axialen Richtung radial nach aussen hin erweiternd erstreckt und das mittels eines erfindungsgemässen Schweissverfahrens an die Leitschaufeln 3 geschweisst ist. Die Schweissnaht 41, an der das Deckteil 4 mit den Leitschaufeln 3 sicher und kerbfrei verschweisst ist, ist deutlich in Fig. 1 zu erkennen.

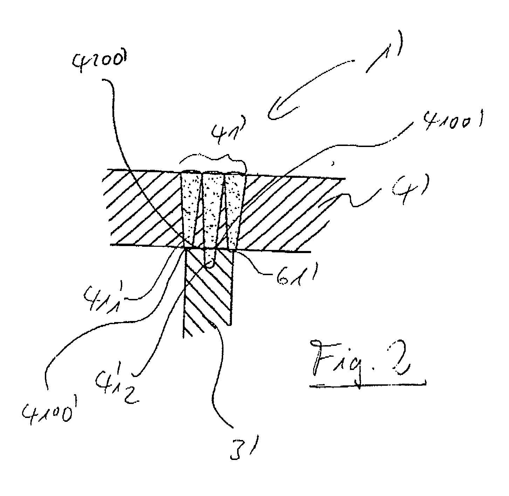

Um die Probleme mit den aus dem Stand der Technik bekannten Schweissverfahren nochmals zu verdeutlichen, ist in Fig. 2 teilweise und im Schnitt ein Laufrad 1' mit Deckteil 4' dargestellt, das geometrisch im wesentlichen dem erfindungsgemässen Impeller 1 gemäss Fig. 1 entspricht, welches Laufrad 1' jedoch nicht mittels eines erfindurgsgemässen Schweissverfahrens geschweisst wurde, sondern nach einem bekannten Verfahren geschweisst wurde, wie es zum Beispiel in der DE 102 61 262 A1 vorgeschlagen wurde.

Zur Abgrenzung der Erfindung zum Stand der Technik sind die Bezugszeichen zu Merkmalen eines bekannten Laufrads 1' mit einem Hochkomma versehen, während die Bezugszeichen, die auf die Merkmale eines erfindungsgemässen Werkstücks 1 hinweisen, nicht mit einem Hochkomma versehen sind.

Das Deckteil 4' des Laufrads 1 der Fig. 2 wurde, wie deutlich erkennbar ist, mittels eines Tiefschweissverfahrens, im vorliegenden Fall mittels Lasertiefschweissen, an die Leitschaufel 3' angeschweisst. Ein solches Verfahren ist prinzipiell immer dann anwendbar, wenn die Dicke des zu durchschweissenden Materials, im vorliegenden Fall die Dicke des Deckteils 4' so bemessen ist, dass der Energiestrahl, im vorliegenden Fall der Laserstrahl, das Deckteil 4' bevorzugt bis in den anszuschweissenden Körper 3', also hier bis in die Leitschaufel 3' beim Schweissvorgang durchdringen kann. Im Beispiel der Fig. 2 wurde die Leitschaufel 3' über drei mehr oder weniger separat getrennte Tiefschweissstellen 411', 412' an das Deckteil 4' angeschweisst. Dadurch entstehen an den Verbindungstellen zwischen Deckteil 4' und Leitschaufel 3' Kerben 4100', 4200', die, wie sich gezeigt hat, zu hohen Kerbspannungen und damit zu hohen Kerbwirkungsfaktoren führen, was die Stabilität und Festigkeit der Schweissung, insbesondere unter extremen Betriebszustaänden, wie zum Beispiel bei hohen Umdrehungszahlen des Leitrades 1', massiv negativ beeinflusst. Im schlimmsten Fall kann es dabei zu Rissen im Bereich der Schweissung und unter der Wirkung der sehr hohen Zentrifugalkräfte bei schneller Rotation des Laufrades 1', zu dessen Zerstörung mit allen bekannten Konsequenzen kommen.

Dabei entstehen die Kerben nicht nur dadurch, dass zwei oder mehrere, mehr oder weniger von einander getrennte Tiefschweissstellen 411', 412' eingebracht wurden. Es hat sich nämlich weiter gezeigt, dass die geometrische Ausgestaltung der Leitschaufeln im Bereich der Schweissung an sich bereits zu einer sehr schädlichen Kerbwirkung führt. Dadurch, dass die aus dem Stand der Technik bekannten Leitschaufeln mehr oder weniger scharfkantig, im extremen Fall wie im Beispiel der Fig. 2 gezeigt sogar unter einem Winkel von ca. 90° an das Deckteil 4' anstossen, entstehen an der Umgrenzungslinie 61', die die radiale Begrenzung der Leitschaufel 3' in dem Bereich definiert, in dem Leitschaufel 3' an das Deckteil 4' angrenzt, beim Schweissen automatisch Kerben, die die Festigkeit und Qualität der Schweissverbindung massiv negativ beeinflussen.

Das heisst, es ist eine wesentliche Erkenntnis der vorliegenden Erfindung, dass sowohl das Schweissen über mehr oder weniger getrennte Tiefschweissstellen 411', 412', als auch die Geometrie der Leitschaufel im Bereich der Schweissverbindung zu unerwünschten Kerbwirkungen führen kann, die die Festigkeit der Schweissverbindung negativ beeinflussen.

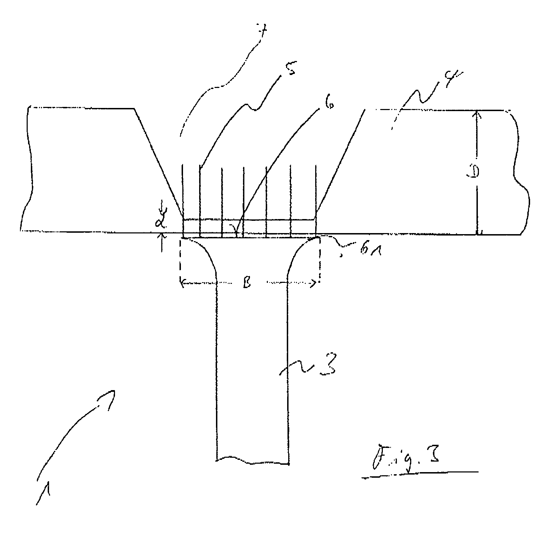

In Fig. 3 ist schliesslich ein Laufrad gemäss Fig. 1 schematisch dargestellt, das mit einem erfindungsgemässen Schweissverfahrün geschweisst wurde. Bei dem in Fig. 3 dargestellten Ausführungsbeispiel eines erfindungsgemässen Impellers 1, handelt sich dabei um einen Impeller 1, der ein Deckteil 4 hat, das eine solche Dicke D hat, das der Energiestrahl 5, im vorliegenden Beispiel der Laserstrahl 5, nicht in der Lage ist, die komplette Dicke D des Deckteils 4 zu durchdringen. Ein Deckteil 4 von solch grosser Dicke D kann z.B. notwendig sein, wenn sehr grosse Kräfte auf das Deckteil 4 im Betriebszustand wirken, so dass eine besonders hohe Stabilität des Deckteils 4 gewährleistet werden muss.

Dass trotz der grossen Dicke D des Deckteils 4 die Leitschaufel 3 an das Deckteil 4 mittels Lasertiefschweissens, das an sich bekannt ist, angeschweisst werden kann, ist im Deckteil 4 auf einer der Kontaktfläche 6 abgewandten Seite der Leitschaufel 3 eine Schweissmulde 7 vorgesehen. Dadurch muss der Laserstahl 5 beim Lasertiefschweissen nur die reduzierte Dicke d am Deckteil 4 durchdringen.

Um die oben, insbesondere an Hand der Fig. 3 ausführlich beschriebene schädliche Kerbwirkung bzw. die schädlichen Kerben zu vermeiden, wird der erfindungsgemässe Impeller über eine gesamte Breite B der Kontaktfläche 6 zwischen dem Grundkörper 2 und dem Deckteil 4 gleichmässig und vollständig verschweisst. D.h., es werden nicht, wie aus dem Stand der Technik bekannt, mehr oder weniger voneinander getrennte Tiefschweissstellen 411'. 412' eingebracht, sondern es wird über die gesamte Breite B der Kontaktfläche 6 zwischen dem Grundkörper 2 und dem Deckteil 4 gleichmässig und vollständig flächig geschweisst, so dass die gefürchteten Kerben, die unter anderem durch das lokalisierte Tiefschweissen entstehen, durch das flächige Schweissen gemäss der vorliegenden Erfindung vermieden werden.

Dabei werden nicht nur Kerben im Bereich innerhalb der Begrenzungslinie 61, also im Bereich der Kontaktfläche 6 wirksam vermieden. Sondern durch die spezielle geometrische Ausgestaltung der Leitschaufel 3 werden auch Kerben bzw. Kerbwirkungen am Rand 61 der Schweissung, also im Bereich der Umfangslinie 61 wirksam vermieden. Das wird dadurch erreicht, dass sich die Leitschaufel 3 im Bereich der Kontaktfläche 6 in Richtung zur Kontaktfläche 6 hin erweiternd erstreckt, bevorzugt in Form eines z.B. kreisartigen Bogens, d.h. unter einem vorgegebenen konstanten oder nicht konstanten Radius, und somit die Leitschaufel 3 nicht in einem mehr oder weniger scharfkantigen Stoss an das Deckteil 4 anstösst. Durch die sich erweiternde Geometrie der Leitschaufel 3 im Bereich der Kontaktfläche 6, wird somit ein sanfter Übergang zwischen Leitschaufel 3 und Deckteil 4 im Bereich der Umgrenzungslinie 61 geschaffen, so dass auch in den Randbereichen der Schweissung Kerben bzw. eine Kerbwirkung vermieden wird.

Es versteht sich, dass in ganz bestimmten Fällen, insbesondere wenn keine extremen Festigkeitswerte gefordert sind, die Erweiterung nicht unbedingt in Form eines Radius, sondern z.B. auch in Form einer schrägen Plattform ausgeführt sein kann.

Die Funktion der sich erweiternden Leitschaufel ist nämlich neben der Vermeidung von Kerben auch die Vergrösserung der Verbindungsfläche, so dass grössere Kräfte übertragbar sind.

## Patentansprüche

1. Werkstück, insbesondere Laufrad, Impeller, oder Leitrad für eine Turbine, für eine Pumpe oder für einen Verdichter, umfassend einen Grundkörper (2) mit einer Leitschaufel (3), **dadurch gekennzeichnet dass** die Leitschaufel (3) am Grundkörper (2) und / oder an einem Deckteil (4) kerbfrei verschweisst ist.

2. Werkstück nach Anspruch 1, wobei die Leitschaufel (3) am Grundkörper (2) und / oder am Deckteil (4) mit einem Energiestrahl (5), insbesondere mit einem Laserstrahl (5), im speziellen mittels Lasertiefschweissen verschweisst ist.

3. Werkstück nach Anspruch 1 oder 2, wobei die Leitschaufel (3) über eine gesamte Breite (B) einer Kontaktfläche (6) zwischen dem Grundkörper (2) und / oder dem Deckteil (4) vollständig verschweisst ist.

4. Werkstück nach einem der vorangehenden Ansprüche, wobei sich die Leitschaufel (3) im Bereich der Kontaktfläche (6) in Richtung zur Kontaktfläche (6) hin erweiternd erstreckt.

5. Werkstück nach einem der vorangehenden Ansprüche, wobei im Grundkörper (2) und / oder im Deckteil (4) auf einer der Kontaktfläche (6) abgewandten Seite der Leitschaufel (3) eine Schweissmulde (7) vorgesehen ist.

6. Werkstück nach einem der vorangehenden Ansprache, wobei die Schweissmulde (7) mit einem Füllwerkstoff ausgefüllt ist.

7. Werkstück nach einem der vorangehenden Ansprüche, wobei die Leitschaufel (3) mittels eines zerspanenden Verfahrens, durch Erodieren, Schmieden, Schweissen, oder ein anderes geeigretes Verfahren aus dem Grundkörper (2) und / oder aus dem Deckteil (4) herausgearbeitet ist.

8. Werkstück nach einem der vorangehenden Ansprüche, wobei der Grundkörper (2) und / oder die Leitschaufel (3) und / oder das Deckteil (4) aus einer Nickelbasis Legierung, im Speziellen aus Inconel, insbesondere aus Inconel 718, einer Superlegierung, aus Stahl, aus Titan Aluminium oder aus einem anderen geeigneten Metall oder einer Metalllegierung ist.

9. Schweissverfahren zur Herstellung eines Werkstücks (1), insbesondere Laufrad, Impeller, oder Leitrad für eine Turbine, eine Pumpe oder einen Verdichter, umfassend einen Grundkörper (2) mit einer Leitschaufel (3), **dadurch gekennzeichnet dass** die Leitschaufel (3) am Grundkörper (2) und / oder an einem Deckteil (4) kerbfrei verschweisst wird.

10. Schweissverfahren nach Anspruch 9, wobei die Leitschaufel (3) am Grundkörper (2) und/oder am Deckteil (4) mit einem Energiestrahl (5), insbesondere mit einem Laserstrahl (5), im speziellen mittels Lasertiefschweissen verschweisst wird.

11. Schweissverfahren nach Anspruch 9 oder 10, wobei die Leitschaufel (3) über eine gesamte Breite (B) einer Kontaktfläche (6) zwischen dem Grundkörper (2) und / oder dem Deckteil (4) vollständig verschweisst wird.

12. Schweissverfahren nach einem der Ansprüche 9 bis 11, wobei sich die Leitschaufel (3) im Bereich der Kontaktfläche (6) in Richtung zur Kontaktfläche (6) hin erweiternd erstreckt und die Leitschaufel (3) kerbfrei im Bereich einer Umgrenzungslinie (61) der Kontaktfläche (6) verschweisst wird.

13. Schweissverfahren nach einem der Ansprüche 9 bis 12, wobei im Grundkörper (2) und / oder im Deckteil (4) auf einer der Kontaktfläche (6) abgewandten Seite der Leitschaufel (3) eine Schweissmulde (7) vorgesehen wird.

14. Schweissverfahren nach einem der Ansprüche 9 bis 13, wobei die Schweissmulde (7) mit einem Füllwerkstoff, insbesondere mittels Auftragsschweissen ausgefüllt wird.

15. Schweissverfahren nach einem der Ansprüche 9 bis 14, wobei die Leitschaufel (3) mittels eines zerspanenden Verfahrens, durch Erodieren, Schmieden, Schweissen, oder ein anderes geeignetes Verfahren aus dem Grundkörper (2) und / oder aus dem Deckteil (4) herausgearbeitet wird.

16. Schweissverfahren nach einem der Ansprüche 9 bis 15, wobei der Grundkörper (2) und / oder die Leitschaufel (3) und / oder das Deckteil (4) aus einer Nickelbasis Legierung, im Speziellen aus Inconel, insbesondere aus Inconel 718, einer Superlegierung, aus Stahl, aus Titan Aluminium oder aus einem anderen Metall oder einer Metalllegierung gefertigt wird.
